(19) **Europäisches Patentamt / European Patent Office / Office européen des brevets**

(11) **EP 2 225 535 B1**

(12) **FASCICULE DE BREVET EUROPEEN**

(45) Date de publication et mention
de la délivrance du brevet:
**07.09.2011 Bulletin 2011/36**

(21) Numéro de dépôt: **08866392.7**

(22) Date de dépôt: **02.12.2008**

(51) Int Cl.:
***G01C 25/00*** (2006.01)

(86) Numéro de dépôt international:
**PCT/EP2008/066663**

(87) Numéro de publication internationale:
**WO 2009/083374 (09.07.2009 Gazette 2009/28)**

(54) **PROCEDE D'ALIGNEMENT AUTONOME DE CENTRALE INERTIELLE POUR INSTRUMENT DE BORD POUVANT EQUIPER UN AERONEF ET INSTRUMENT DE BORD UTILISANT UN TEL PROCEDE**

VERFAHREN FÜR DIE UNABHÄNGIGE AUSRICHTUNG EINER TRÄGHEITSEINHEIT FÜR EIN BORDINSTRUMENT ZUR MONTAGE IN EINEM FLUGZEUG UND BORDINSTRUMENT MIT DERARTIGEM VERFAHREN

METHOD FOR INDEPENDENT ALIGNMENT OF AN INERTIAL UNIT FOR AN ONBOARD INSTRUMENT TO BE MOUNTED IN AN AIRCRAFT AND ONBOARD INSTRUMENT USING SUCH METHOD

(84) Etats contractants désignés:
**AT BE BG CH CY CZ DE DK EE ES FI FR GB GR HR HU IE IS IT LI LT LU LV MC MT NL NO PL PT RO SE SI SK TR**

(30) Priorité: **21.12.2007 FR 0709034**

(43) Date de publication de la demande:
**08.09.2010 Bulletin 2010/36**

(73) Titulaire: **Thales**
**92526 Neuilly-sur-Seine Cédex (FR)**

(72) Inventeurs:
• **CHEVALIER, Jean-René**
**F-86530 Cenon Sur Vienne (FR)**

• **MULHAUPT, Gaël**
**F-86000 Poitiers (FR)**
• **CHESNE, Philippe**
**F-41100 Vendôme (FR)**

(74) Mandataire: **Lucas, Laurent Jacques**
**Marks & Clerk France**
**Conseils en Propriété Industrielle**
**Immeuble " Visium "**
**22, avenue Aristide Briand**
**94117 Arcueil Cedex (FR)**

(56) Documents cités:
**DE-A1- 3 443 317     DE-A1- 3 928 738**
**US-A1- 2006 047 427     US-A1- 2006 169 021**

## EP 2 225 535 B1

**Description**

L'invention concerne un procédé d'alignement autonome de centrale inertielle pour instrument de bord pouvant équiper un aéronef et un instrument de bord pouvant mettre en oeuvre un tel procédé. L'invention concerne en particulier un procédé d'alignement autonome de centrale inertielle pour instrument de secours générant et affichant des informations de vitesse, d'altitude et d'attitude d'un aéronef. Elle trouve une utilité particulière pour l'alignement de centrales inertielles équipant des aéronefs pouvant décoller à partir de plates-formes non stabilisées, comme des plates-formes pétrolières, des porte-avions ou des porte-hélicoptères. Mais elle peut également s'appliquer pour l'alignement de centrales inertielles équipant des aéronefs décollant de plates-formes stables, comme une piste d'atterrissage, dans la mesure où l'aéronef peut être soumis à des mouvements, même à l'arrêt, par exemple à cause du vent ou des servitudes autour de l'aéronef.

Les instruments de secours sont des instruments de bord autonomes générant et affichant des informations de vol essentielles au pilote d'un aéronef en cas de défaillance d'instruments de bord primaires. Ces informations de vol, obtenues généralement avec une moindre précision que celle des instruments de bord primaires, concernent essentiellement la vitesse, l'altitude et l'attitude de l'aéronef. Afin de garantir l'autonomie des instruments de secours vis-à-vis des instruments de bord primaires, les instruments de secours doivent disposer de leurs propres capteurs afin de générer et d'afficher la vitesse, l'altitude et l'attitude de l'aéronef. En particulier, les instruments de secours comportent habituellement un capteur de pression statique, un capteur de pression totale et une centrale inertielle.

Les capteurs de pression statique et totale sont respectivement reliés à une prise de pression statique et à une prise de pression totale situées sur la peau de l'aéronef. La pression statique permet de déterminer l'altitude de l'aéronef. La différence entre la pression totale et la pression statique permet de déterminer la vitesse de l'aéronef par rapport à l'air.

La centrale inertielle comprend 3 gyromètres et 2 ou 3 accéléromètres. Les gyromètres mesurent les vitesses de rotation du référentiel du capteur, en l'occurrence un système d'axes lié à l'instrument de secours, par rapport à un référentiel inertiel. Par intégration des vitesses de rotation, il est possible de connaître la position de l'instrument de secours par rapport au référentiel inertiel et donc, connaissant la position de l'instrument de secours par rapport à l'aéronef et la position du repère géographique local par rapport au repère inertiel, il est possible de connaître la position de l'aéronef par rapport au repère géographique local. La position de l'aéronef par rapport au repère géographique local, appelée attitude de l'aéronef, est repérée par rapport à un axe de roulis, un axe de tangage et un axe de lacet et les mouvements autour de ces axes sont appelés respectivement le roulis, le tangage et le lacet. Les accéléromètres mesurent des forces non gravitationnelles appliquées à l'aéronef, dont on déduit des accélérations de translation du référentiel du capteur par rapport au référentiel inertiel. La combinaison des gyromètres et des accéléromètres permet une détermination précise de l'attitude de l'aéronef, les données fournies par les accéléromètres étant utilisées préférentiellement aux données fournies par les gyromètres dans les phases statiques ou quasi-statiques de vol, et les données fournies par les gyromètres étant utilisées préférentiellement aux données fournies par les accéléromètres lors des phases dynamiques du vol.

Lors de la mise sous tension d'un aéronef et en particulier d'un instrument de secours, la centrale inertielle de l'instrument de secours doit être initialisée afin de fournir des informations d'attitude les plus fiables possibles au cours du vol. Cette initialisation comprend une phase d'alignement consistant notamment à estimer la dérive des différents gyromètres, c'est-à-dire la vitesse de rotation mesurée par les gyromètres en l'absence de tout mouvement de ceux-ci. Les gyromètres étant des capteurs électroniques, leur dérive peut différer entre deux mises sous tension de la centrale inertielle, au point de rendre inutilisable toute mesure effectuée par ces gyromètres et donc toute attitude affichée par l'instrument de secours. Il est donc nécessaire de déterminer la dérive des gyromètres à chaque mise sous tension. De plus, l'alignement des gyromètres doit être effectué en l'absence de tout mouvement de la centrale inertielle, sous peine d'intégrer un mouvement de la centrale inertielle dans la dérive d'un gyromètre.

Pour assurer l'alignement correct des gyromètres d'une centrale inertielle, il est connu de vérifier la présence ou l'absence de mouvements de la centrale inertielle au moyen des accéléromètres de la centrale inertielle. Pendant toute la durée de l'alignement, les accéléromètres mesurent les forces non gravitationnelles de la centrale inertielle par rapport au référentiel inertiel. En cas de mouvement de la centrale inertielle au cours de l'alignement, mesuré par les accéléromètres, l'instrument de secours, à la fin de l'alignement, invalide la détermination de la dérive de chaque gyromètre, affiche un message indiquant au pilote la détection de mouvement et demande au pilote de relancer l'alignement soit en éteignant et remettant sous tension l'instrument de secours, soit en pressant un bouton sur la face avant de l'instrument de secours. Cette relance de l'alignement est impérative dans la mesure où la disponibilité de l'instrument de secours, et donc de l'alignement de la centrale inertielle, est une condition nécessaire à l'autorisation de décollage de l'aéronef.

Une telle solution présente plusieurs inconvénients. Un premier inconvénient est l'attente de la fin de l'alignement pour indiquer la détection d'un mouvement au cours de l'alignement. Ce n'est donc qu'à la fin de l'alignement des gyromètres que le pilote a connaissance de l'invalidation de l'alignement et peut le relancer. Par conséquent, le temps

2

écoulé entre la détection de mouvement et la fin de l'alignement est perdu. Un deuxième inconvénient est la perte de l'estimation des dérives effectuée entre le début de l'alignement et la détection d'un mouvement. A la fin de l'alignement invalidé, toute la procédure d'alignement est relancée, la dérive estimée risquant d'avoir été faussée par le mouvement de la centrale inertielle. A plus forte raison, si l'alignement est relancé par une remise à zéro matérielle, c'est-à-dire en éteignant et remettant sous tension l'instrument de secours, la dérive des gyromètres risque de changer, rendant obsolète la détermination précédente des dérives. Un troisième inconvénient est l'impossibilité, dans certaines situations, de pouvoir effectuer un alignement. Le cas de figure peut notamment se présenter lorsque l'aéronef est démarré sur une plate-forme mouvante. Dans la plupart des cas, le mouvement de la plate-forme, par exemple dû à la houle de la mer, ne peut être empêché. L'aéronef doit alors attendre la cessation des mouvements, en l'occurrence une accalmie de la houle, pour pouvoir décoller. Une telle immobilisation est incontestablement néfaste à la rentabilité des aéronefs.

Le document DE3443317 décrit un procédé d'alignement autonome de centrale inertielle pour instrument de bord embarqué dans un aéronef, dans lequel les mouvements de la centrale inertielle sont surveillés en continu et, à l'aide d'un interrupteur, la procédure d'alignement peut être suspendue lorsqu'un mouvement est détecté et reprise lors de la disparition du mouvement.

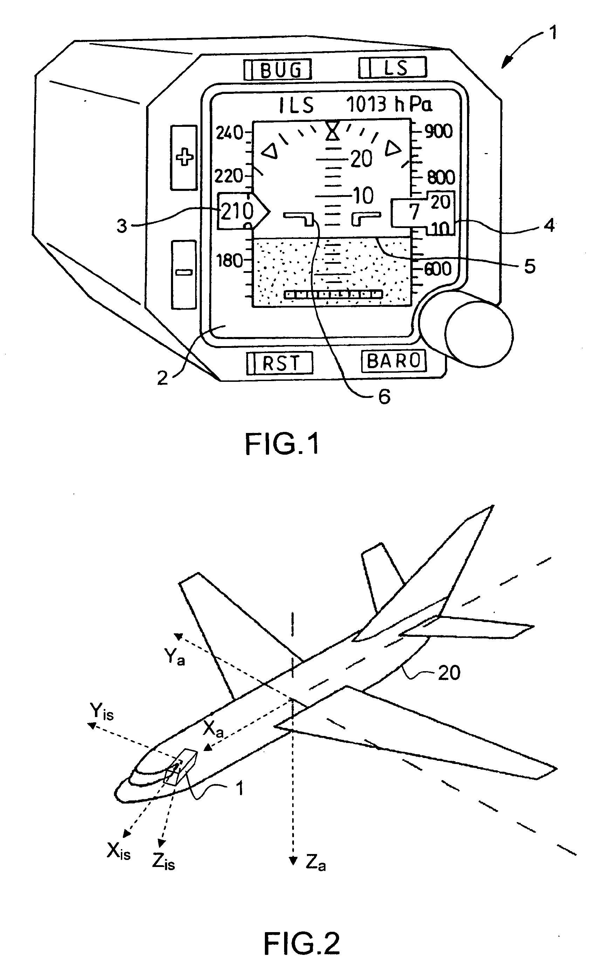

Le document US2006/047427 décrit également un procédé d'alignement autonome de centrale inertielle pour instrument de bord équipant un aéronef, comprenant les étapes de surveiller l'apparition d'un mouvement de la centrale inertielle pendant l'alignement et suspendre l'alignement de la centrale inertielle en cas d'apparition de mouvement. Dans ce cas, d'après la figure 2 de ce document, soit le procédé retourne au début du process (fig. 2, boucle 210), soit une procédure d'alignement assisté est enclenchée (fig. 2, bloc 216).

Un but de l'invention est notamment de pallier tout ou partie des inconvénients précités. A cet effet, l'invention a pour objet un procédé d'alignement autonome de centrale inertielle pour instrument de bord pouvant équiper un aéronef, selon la revendication 1. Le procédé comprend les étapes suivantes :

- surveiller l'apparition d'un mouvement de la centrale inertielle pendant l'alignement,
- suspendre l'alignement de la centrale inertielle en cas d'apparition de mouvement,
- reprendre l'alignement de la centrale inertielle à la disparition du mouvement.

L'invention a également pour objet un instrument de bord pouvant équiper un aéronef comprenant une centrale inertielle comportant des moyens d'alignement autonome, selon la revendication 12. L'instrument de bord comprend des moyens pour surveiller l'apparition d'un mouvement de la centrale inertielle pendant l'alignement, des moyens pour suspendre l'alignement en cas d'apparition de mouvement et des moyens pour reprendre l'alignement de la centrale inertielle à la disparition du mouvement.

L'invention a notamment pour avantage qu'elle permet un alignement rapide et fiable de la centrale inertielle sans complexifier l'algorithme de calcul des dérives. En particulier, l'alignement peut être effectué pendant toutes les périodes où aucun mouvement de la centrale inertielle n'est détecté, mais uniquement pendant ces périodes. Il en résulte une optimisation de la durée de l'alignement. De plus, l'alignement reste préservé des mouvements de la centrale inertielle. Il est même possible d'augmenter la précision de l'alignement en abaissant le seuil de détection des mouvements de la centrale inertielle, dans la mesure où la durée d'alignement est optimisée.

L'invention sera mieux comprise et d'autres avantages apparaîtront à la lecture de la description détaillée d'un mode de réalisation donné à titre d'exemple, description faite en regard de dessins annexés qui représentent :

- la figure 1, un instrument de secours pouvant équiper un aéronef ;
- la figure 2, un aéronef équipé de l'instrument de secours représenté sur la figure 1, l'aéronef et l'instrument de secours possédant chacun un système d'axes ;
- la figure 3, un synoptique des moyens mis en oeuvre par l'instrument de secours pour le calcul et l'affichage de l'attitude de l'aéronef ;
- la figure 4, un exemple d'étapes mises en oeuvre pour l'initialisation de l'instrument de secours ;
- la figure 5, un exemple d'étapes mises en oeuvre selon l'invention pour l'initialisation de l'instrument de secours ;
- la figure 6, sous forme de chronogramme, un exemple d'initialisation de l'instrument de secours au cours duquel un mouvement est détecté ;
- la figure 7, sous forme de chronogramme, un autre exemple d'initialisation de l'instrument de secours au cours duquel des mouvements sont détectés ;
- la figure 8, une illustration de différents temps impliqués au cours de l'initialisation de l'instrument de secours.

La description qui suit est faite en rapport à un instrument de secours. Il est bien entendu possible de mettre en oeuvre l'invention à partir de tout instrument de bord comportant une centrale inertielle.

La figure 1 représente un instrument de secours 1 pouvant équiper un aéronef. L'instrument de secours 1 comporte un afficheur 2, par exemple un écran à cristaux liquides. L'afficheur 2 affiche des informations de vol essentielles au pilote pour le pilotage de l'aéronef. Ces informations concernent notamment la vitesse air, l'altitude et l'attitude de l'aéronef. La vitesse air et l'altitude de l'aéronef sont représentées sous forme d'échelles graduées verticales tournantes, une échelle 3 indiquant la vitesse air de l'aéronef et une échelle 4 indiquant l'altitude de l'aéronef. L'attitude de l'aéronef est symbolisée par une ligne d'horizon mobile 5 par rapport à une silhouette fixe 6 représentant l'aéronef. Les informations de vitesse air et d'altitude sont obtenues à partir de capteurs anémo-barométriques reliés d'une part à des prises de pression disposées sur la peau de l'aéronef et d'autre part à un calculateur. Les capteurs anémo-barométriques fournissent une pression statique Ps et une pression totale Pt de l'air entourant l'aéronef à partir desquelles le calculateur détermine la vitesse air et l'altitude de l'aéronef. L'attitude de l'aéronef est obtenue à partir d'une centrale inertielle comprenant des gyromètres et des accéléromètres, comme expliqué plus loin. Les capteurs anémo-barométriques, la centrale inertielle et le calculateur forment des moyens de détermination des paramètres de vol. Ces moyens de détermination sont autonomes car ils appartiennent à l'instrument de secours et peuvent fonctionner sans autre information extérieure que celles provenant des prises de pression.

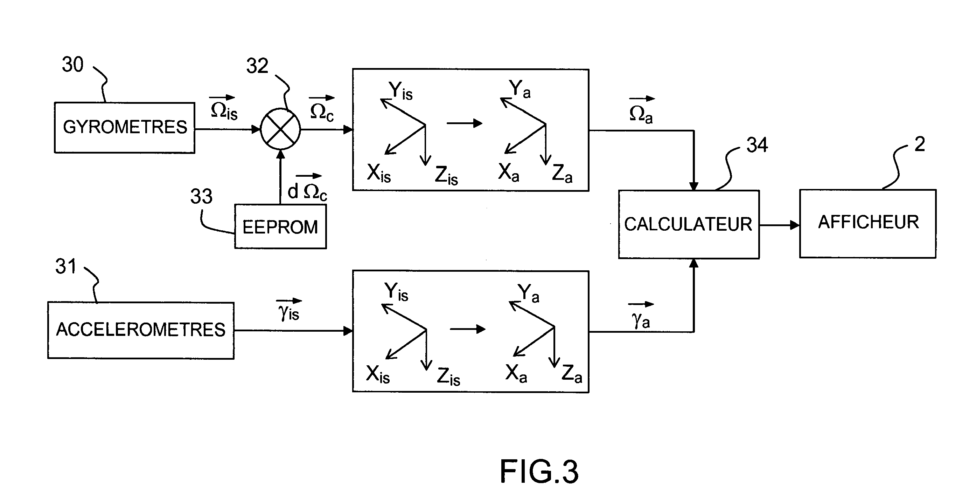

La figure 2 représente un aéronef 20 équipé de l'instrument de secours 1 et la figure 3 représente un synoptique des moyens mis en oeuvre par l'instrument de secours 1 pour le calcul et l'affichage de l'attitude de l'aéronef 20. La centrale inertielle de l'instrument de secours 1 comprend généralement 3 gyromètres 30 et 3 accéléromètres 31. Les gyromètres 30 mesurent des vitesses angulaires $\overrightarrow{\Omega_{is}}$ d'un repère $R_{is}$ ($\overrightarrow{X_{is}}$, $\overrightarrow{Y_{is}}$, $\overrightarrow{Z_{is}}$) *lié* à l'instrument de secours 1 par rapport à un repère inertiel. Pour la lisibilité de la description, on pourra négliger les mouvements de la terre et considérer un repère géographique local, appelé repère terrestre $R_t$ ($\overrightarrow{X_t}$, $\overrightarrow{Y_t}$, $\overrightarrow{Z_t}$) dans la suite de la description, comme étant le repère inertiel. Pour une mise en oeuvre de l'invention, il sera toutefois possible de tenir compte des mouvements de la terre par rapport au référentiel inertiel. Comme représenté à la figure 3, les vitesses angulaires $\overrightarrow{\Omega_{is}}$ de la centrale inertielle sont corrigées au moyen d'un opérateur 32 des dérives internes $\overrightarrow{d\Omega_c}$ de la centrale inertielle. Les dérives internes $\overrightarrow{d\Omega_c}$ sont par exemple stockées dans une mémoire vive 33. Des moyens pour déterminer les dérives internes $\overrightarrow{d\Omega_c}$ seront décrits plus loin. Les vitesses angulaires ainsi corrigées et notées $\overrightarrow{\Omega_c}$ dans le repère $R_t$ ($\overrightarrow{X_t}$, $\overrightarrow{Y_t}$, $\overrightarrow{Z_t}$) sont transformées pour obtenir les vitesses angulaires $\overrightarrow{\Omega_a}$ d'un repère lié à l'aéronef 20 et noté $R_a$ ($\overrightarrow{X_a}$, $\overrightarrow{Y_a}$, $\overrightarrow{Z_a}$) par rapport au repère $R_t$ ($\overrightarrow{X_t}$, $\overrightarrow{Y_t}$, $\overrightarrow{Z_t}$). De même, les accéléromètres 31 mesurent des accélérations de translation $\overrightarrow{\gamma_{is}}$ du repère $R_{is}$ ($\overrightarrow{X_{is}}$, $\overrightarrow{Y_{is}}$, $\overrightarrow{Z_{is}}$) lié à l'instrument de secours 1 par rapport au repère terrestre $R_t$($\overrightarrow{X_t}$, $\overrightarrow{Y_t}$, $\overrightarrow{Z_t}$). Ces accélérations de translation $\overrightarrow{\gamma_{is}}$ sont également transformées pour obtenir les accélérations de translation $\overrightarrow{\gamma_a}$ du repère $R_a$ ($\overrightarrow{X_a}$, $\overrightarrow{Y_a}$, $\overrightarrow{Z_a}$) lié à l'aéronef 20 par rapport au repère $R_t$ ($\overrightarrow{X_t}$, $\overrightarrow{Y_t}$, $\overrightarrow{Z_t}$) Les vitesses angulaires $\overrightarrow{\Omega_a}$ et les accélérations de translation $\overrightarrow{\gamma_a}$ permettent de déterminer l'attitude de l'aéronef 20 par rapport au repère terrestre $R_t$ ($\overrightarrow{X_t}$, $\overrightarrow{Y_t}$, $\overrightarrow{Z_t}$) au moyen d'un calculateur 34 appartenant à la centrale inertielle. Avantageusement, le calculateur 34 effectue également les transformations de vitesses angulaires et d'accélérations de translation. Dans une forme particulière de réalisation, seules les accélérations de translation $\overrightarrow{\gamma_a}$ sont utilisées pour la détermination de l'attitude de l'aéronef 20 lorsqu'il est en vol stabilisé. A l'inverse, seules les vitesses angulaires $\overrightarrow{\Omega_a}$ sont utilisées pour la détermination de l'attitude de l'aéronef 20 lorsqu'il est en vol dynamique. D'autres formes de réalisation sont possibles. En particulier, il est possible d'utiliser une pondération des accélérations de translation $\overrightarrow{\gamma_a}$ et des vitesses angulaires $\overrightarrow{\Omega_a}$ pour la détermination de l'attitude de l'aéronef 20, cette pondération pouvant varier en fonction des conditions de vol. L'attitude de l'aéronef 20 est affichée sur l'afficheur 2 de l'instrument de secours 1.

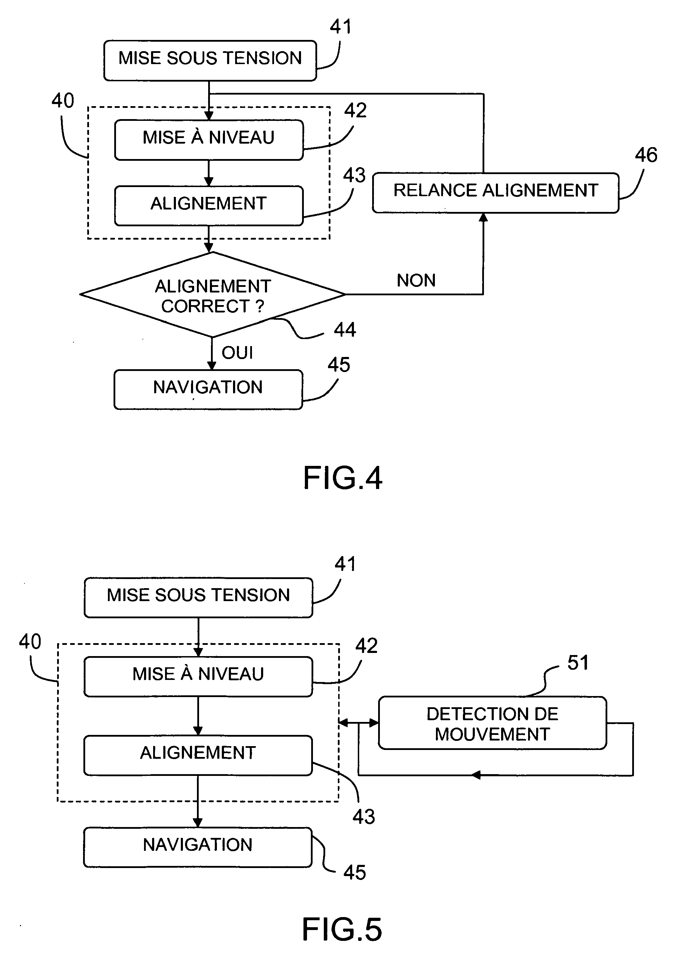

La figure 4 représente des étapes mises en oeuvre pour l'initialisation d'un instrument de secours 1. A la mise sous tension 41 de l'instrument de secours 1, une estimation grossière, appelée mise à niveau 42, des dérives internes $\overrightarrow{d\Omega_c}$ de la centrale inertielle est effectuée. Cette mise à niveau 42 permet de déterminer une valeur minimale et une valeur maximale pour chaque dérive de gyromètre 30. A la fin de la mise à niveau 42, un alignement fin, également appelé alignement 43, est effectué pour déterminer précisément la dérive de chaque gyromètre 30. L'alignement 43 comporte notamment une étape de mesure des dérives instantanées et une étape de filtrage de ces dérives pour obtenir des valeurs précises des dérives internes $\overrightarrow{d\Omega}_c$. La mise à niveau 42 et l'alignement 43 sont appelés alignement global 40. Au cours de cet alignement global 40, les accéléromètres 31 surveillent les mouvements de la centrale inertielle. A l'issue de l'alignement 43, une étape de contrôle 44 examine si les mouvements détectés par les accéléromètres 31 n'ont pas dépassé un seuil prédéfini et si les dérives internes $\overrightarrow{d\Omega}_c$ se trouvent entre les valeurs minimales et maximales déterminées lors de la mise à niveau 42. Si tel est le cas, les dérives internes $\overrightarrow{d\Omega}_c$ sont enregistrées dans la mémoire vive 33 de l'instrument de secours 1. L'instrument de secours 1 est prêt pour la navigation 45 et affiche les informations d'attitude de l'aéronef 20. Dans tous les autres cas, les dérives internes $\overrightarrow{d\Omega}_c$ sont invalidées et l'alignement global 40 est relancé selon le repère 46.

Les étapes mises en oeuvre à la figure 4 ne permettent pas un alignement rapide de la centrale inertielle lorsque des mouvements sont détectés. En particulier, le temps écoulé entre la détection d'un mouvement et la fin de l'alignement est perdu, l'alignement global 40 étant invalidé. De même, le temps écoulé entre le début de la mise à niveau 42 et la détection du mouvement est également perdu, les dérives intermédiaires n'étant pas réutilisées pour l'alignement global 40 ultérieur. Par ailleurs, ces étapes ne permettent pas un alignement global 40 des gyromètres 30 lorsque les mouvements sont répétés et en particulier lorsque le temps s'écoulant entre deux mouvements est chaque fois inférieur à la durée nécessaire à l'alignement global 40.

Selon l'invention et comme représenté à la figure 5, après la mise sous tension 41 de l'instrument de secours 1, on surveille les mouvements de la centrale inertielle pendant la mise à niveau 42 et l'alignement 43. En cas de mouvement détecté, on suspend la mise à niveau 42 ou l'alignement 43 de la centrale inertielle. Lorsque plus aucun mouvement n'est détecté, on reprend la mise à niveau 42 ou l'alignement 43 de la centrale inertielle. La détection d'un mouvement, la suspension de l'alignement global 40 et sa reprise sont illustrées par le repère 51. A l'issue de l'alignement 43, les dérives internes des gyromètres 30 sont enregistrées, par exemple dans la mémoire vive 33 de l'instrument de secours 1, et l'instrument de secours 1 peut être utilisé pour la détermination et l'affichage de l'attitude de l'aéronef 20.

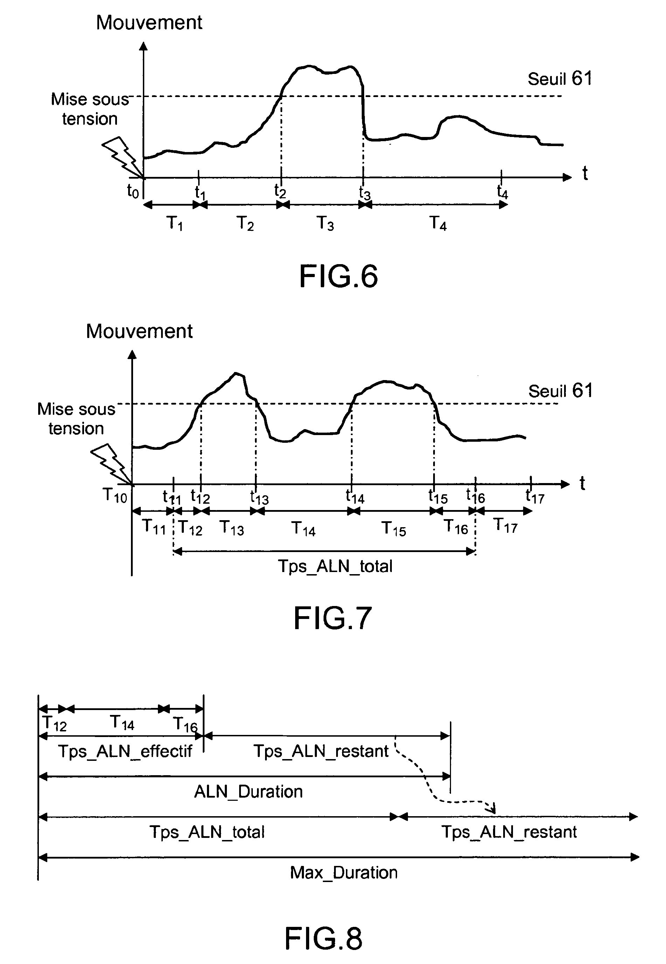

La figure 6 présente, sous forme de chronogramme, un exemple d'initialisation d'instrument de secours 1 au cours duquel un mouvement est détecté par un accéléromètre 31 suivant un axe de l'instrument de secours 1. Le temps est représenté en abscisse et les mouvements sont représentés en ordonnée. Pour cet exemple, on considère l'amplitude de l'accélération du mouvement. D'autres types de mouvements peuvent cependant être surveillés. A la mise sous tension 41 de l'instrument de secours 1 à un instant $t_0$, on effectue la mise à niveau 42 de la centrale inertielle pendant une durée $T_1$, généralement une dizaine de secondes. Cette mise à niveau 42 permet de définir une valeur minimale et une valeur maximale pour chaque dérive des gyromètres 30. A la fin de la mise à niveau 42, on effectue, à partir d'un instant $t_1$ et pendant une durée $T_2$, l'alignement fin 43 de la centrale inertielle jusqu'à un instant $t_2$ à partir duquel un mouvement est détecté. Pendant toute une durée $T_3$ où le mouvement est détecté, c'est-à-dire entre les instants $t_2$ et $t_3$, l'alignement 43 est suspendu. Avantageusement, seuls les mouvements dépassant une amplitude déterminée, appelée seuil 61, suspendent l'alignement global 40. Pendant la durée $T_3$, la détermination des dérives internes $\overrightarrow{d\Omega}_c$ est suspendue. En d'autres termes, les mesures des dérives pendant cette durée $T_3$ ne sont pas prises en compte pour la détermination des dérives internes $\overrightarrow{d\Omega}_c$. En revanche, les valeurs intermédiaires de dérives obtenues entre les instants $t_0$ et $t_2$ sont gardées en mémoire, par exemple dans la mémoire vive 33, pour être réutilisées à la reprise de l'alignement 43. Lorsque, à l'instant $t_3$, l'amplitude du mouvement repasse en dessous du seuil 61, l'alignement 43 est repris là où il avait été suspendu, avec les valeurs intermédiaires de dérives obtenues entre les instants $t_0$ et $t_2$. Plus généralement, l'étape de suspension de l'alignement 40 de la centrale inertielle peut comprendre une sous-étape consistant à enregistrer des valeurs courantes utilisées pour l'alignement 40, et l'étape de reprise de l'alignement 40 peut comprendre une sous-étape consistant à récupérer les valeurs enregistrées pour la suite de l'alignement 40.

Selon un mode particulier de réalisation, l'alignement 43 a une durée fixe paramétrable appelée ALN_Duration. Cette durée ALN_Duration est généralement de quelques dizaines de secondes, par exemple 80 secondes et peut être paramétrée en fonction de la latitude à laquelle se trouve l'aéronef 20. Selon ce mode de réalisation, l'alignement 43 se poursuit à l'instant $t_3$ pendant une durée $T_4$ de telle sorte que l'addition des durées $T_2$ et $T_4$ soit sensiblement égale à la durée ALN_Duration. Une différence de durée peut notamment s'expliquer par la durée nécessaire à la reprise de l'alignement 43.

Dans cet exemple, on considère que le mouvement est détecté pendant l'alignement 43. Le même procédé peut cependant être appliqué pendant la mise à niveau 42. De même, l'alignement global 40 peut être interrompu et repris un nombre illimité de fois.

Dans l'exemple précité, décrit en référence à la figure 6, on considère la détection de mouvement comme le dépassement d'un seuil par une amplitude d'accélération suivant un axe de l'instrument de secours 1. L'invention ne se limite pas à cette forme de détection et englobe toute forme de mouvement de l'instrument de secours 1. En particulier, il est possible de détecter les mouvements soit par un accéléromètre, soit par un gyromètre, soit encore par une combinaison d'accéléromètres et de gyromètres. Avantageusement, les accéléromètres et/ou les gyromètres de la centrale inertielle sont utilisés. L'autonomie de l'instrument de secours 1 est ainsi conservée. Mais on peut envisager d'utiliser des capteurs externes à l'instrument de secours 1. En fonction des instruments utilisés, il est possible de surveiller une accélération de translation et/ou une vitesse angulaire de l'instrument de secours 1. Il est entendu que le mouvement peut également être surveillé par l'observation d'une vitesse de translation de l'instrument de secours 1, c'est-à-dire l'observation d'une accélération de translation intégrée. Les mouvements peuvent être repérés dans un repère $R_{is}$ ($\vec{X}_{is}$, $\vec{Y}_{is}$, $\vec{Z}_{is}$) lié à l'instrument de secours 1 ou dans un repère $R_a$ ($\vec{X}_a$, $\vec{Y}_a$, $\vec{Z}_a$) lié à l'aéronef 20. Il est possible de passer d'un repère à un autre par un simple changement de repère, l'instrument de secours 1 étant fixe dans l'aéronef 20. Dans une forme de réalisation particulière, les mouvements surveillés de l'instrument de secours 1 comprennent une vitesse angulaire autour d'un axe de lacet de l'aéronef et des vitesses de translation suivant l'axe de lacet de l'aéronef et des axes de roulis et de tangage de l'aéronef.

Selon un mode particulier de réalisation, le procédé selon l'invention affiche sur l'afficheur 2 de l'instrument de secours 1 un décompte de la durée restante avant la fin de l'alignement 43. Le décompte de la durée restante est lancé au début de l'alignement 43, mais on peut également envisager de lancer le décompte de la durée restante au début de la mise à niveau 42. Pour ce mode de réalisation, on considère :

une durée fixe "ALN_Duration" pour effectuer l'alignement 43 en l'absence de mouvement,
une variable de temps "Tps_ALN_effectif" représentant la durée pendant laquelle les dérives ont été estimées au cours de l'alignement 43,
une variable de temps "Tps_ALN_restant" correspondant à la durée restante nécessaire pour l'alignement 43 en l'absence de mouvements,
une variable booléenne "B_OTM" prenant la valeur "vrai" si un mouvement est détecté et la valeur "faux" sinon,
une variable booléenne "B_ALN_Comptete" prenant la valeur "vrai" si l'alignement 43 est terminé et la valeur "faux" sinon.

Toutes les durées et variables de temps contiennent des entiers représentant un nombre de secondes. A la fin de la mise à niveau 42, la variable "Tps_ALN_effectif" est initialisée à la valeur nulle et la variable "B_ALN_Comptete" est initialisée à la valeur "faux". Pendant l'alignement 43, la variable "Tps_ALN_effectif" est incrémentée d'une unité toutes les secondes. La variable "Tps_ALN_restant" est déterminée par la relation suivante :

$$\text{Tps\_ALN\_restant} = \text{ALN\_Duration} - \text{Tps\_ALN\_effectif}$$

Un exemple d'algorithme permettant de déterminer la durée restante nécessaire à l'alignement 43 est donné ci-dessous :

Tant que B_ALN_Complete = faux
Si B_OTM = faux alors

$$\text{Tps\_ALN\_effectif} \leftarrow \text{Tps\_ALN\_effectif} + 1$$

Fin si

$$\text{Tps\_ALN\_restant} \leftarrow \text{ALN\_Duration} - \text{Tps\_ALN\_effectif}$$

Si Tps_ALN_restant<= 0 alors

$$B\_ALN\_Complete \leftarrow vrai$$

Fin si

Fin tant que

A la fin de l'alignement 43, l'afficheur 2 de l'instrument de secours 1 peut afficher un message indiquant au pilote que l'alignement global 40 est terminé. L'afficheur 2 peut également afficher directement l'attitude de l'aéronef 20.

Dans une forme particulière de réalisation, l'alignement global 40 de la centrale inertielle est annulé lorsque le temps écoulé depuis le début de l'alignement 43 additionné à la durée restante avant la fin de l'alignement 43 "Tps_ALN_restant" est supérieur à une durée maximale déterminée. Pour cette forme de réalisation, on considère, en plus de la durée fixe "ALN_Duration" et des variables précédemment définies,
une durée fixe "Max_Duration" correspondant à la durée maximale autorisée pour l'alignement 43 de la centrale inertielle,
une variable "Tps_ALN_total" représentant le temps écoulé depuis le début de l'alignement 43. Ce temps correspond à la durée "Tps_ALN_effectif" additionnée du temps pendant lequel des mouvements ont été détectés,
une variable booléenne "B_ALN_TooLong" prenant la valeur "vrai" si la durée nécessaire à l'alignement 43 est supérieure à la durée maximale autorisée pour l'alignement 43 de la centrale inertielle (Max_Duration). L'algorithme précédent est modifié de la manière suivante :

Tant que (B_ALN_Complete = faux) et (B_ALN_Complete= faux)

$$Tps\_ALN\_total \leftarrow Tps\_ALN\_total + 1$$

Si B_OTM = faux alors

$$Tps\_ALN\_effectif \leftarrow Tps\_ALN\_effectif + 1$$

Fin si

$$Tps\_ALN\_restant \leftarrow ALN\_Duration - Tps\_ALN\_effectif$$

Si Tps_ALN_restant<= 0 alors

$$B\_ALN\_Complete \leftarrow vrai$$

Fin si
Si (Tps_ALN_restant+Tps_ALN_total)>Max_Duration alors

$$B\_ALN\_TooLong \leftarrow vrai$$

Fin si

Fin tant que

Les figures 7 et 8 illustrent cette forme particulière de réalisation dans laquelle une durée maximale "Max_Duration" est autorisée pour l'alignement 43 de la centrale inertielle. Dans l'exemple suivant, on considère que l'alignement 43 est interrompu pendant une durée totale suffisamment longue pour que la durée de l'alignement 43 dépasse la durée maximale autorisée pour l'alignement 43 (Max_Duration).

La figure 7 présente, sous forme de chronogramme, un exemple d'initialisation d'instrument de secours 1 au cours duquel des mouvements sont détectés. Le temps est représenté en abscisse et les mouvements sont représentés en ordonnée. A la mise sous tension 41 de l'instrument de secours 1 à un instant $t_{10}$, on effectue la mise à niveau 42 de la centrale inertielle pendant une durée $T_{10}$. A la fin de la mise à niveau 42, on effectue, à partir d'un instant $t_{11}$ et pendant une durée $T_{12}$, l'alignement fin 43 de la centrale inertielle jusqu'à un instant $t_{12}$ à partir duquel un mouvement est détecté. L'alignement 43 reprend après une durée $T_{13}$ à un instant $t_{l3}$ lorsque plus aucun mouvement n'est détecté jusqu'à un instant $t_{14}$ où des mouvements sont à nouveau détectés, soit pendant une durée $T_{14}$. L'alignement 43 reprend une seconde fois à un instant $t_{15}$ lorsque plus aucun mouvement n'est détecté, soit après une durée $T_{15}$.

La figure 8 illustre les différents temps utilisés dans l'algorithme précédent et pris à un instant $t_{16}$, soit une durée $T_{16}$ après l'instant $t_{15}$. Ces différents temps sont représentés sur des axes horizontaux. La durée d'alignement effectif "Tps_ALN_effectif" correspond à la somme des durées $T_{12}$, $T_{14}$ et $T_{16}$ et le temps écoulé depuis le début de l'alignement 43 (Tps_ALN_total) correspond à la somme des durées $T_{12}$ à $T_{16}$. La durée d'alignement restante "Tps_ALN_restant" est obtenue en soustrayant la durée "Tps_ALN_effectif" à la durée "ALN_Duration". Cette durée d'alignement restante est additionnée au temps "Tps_ALN_total" et la somme est comparée à la durée "Max_Duration". A l'instant $t_{16}$, la somme (Tps_ALN_total + Tps_ALN_restant) est juste supérieure à la durée "Max_Duration". La variable booléenne "B_ALN_TooLong" passe alors à la valeur "vrai". Par conséquent, l'algorithme d'alignement 43 est abandonné. Un message peut être affiché sur l'afficheur 2 de l'instrument de secours pour informer le pilote que la centrale inertielle n'est pas alignée. Le pilote peut alors relancer l'alignement global 40 ou l'alignement fin 43. L'alignement global 40 ou fin 43 peut également être relancé automatiquement.

Il est bien entendu possible de considérer d'autres formes de réalisation pour la limitation de durée de l'alignement 43. En particulier, la durée "Tps_ALN_effectif" et la durée "Tps_ALN_total" peuvent être incrémentées à partir de la mise à niveau 42.

## Revendications

1. Procédé d'alignement autonome (40) de centrale inertielle pour instrument de bord pouvant équiper un aéronef (20), **caractérisé en ce qu'**il comprend les étapes suivantes :

   - surveiller l'apparition d'un mouvement de la centrale inertielle pendant l'alignement (40),
   - suspendre l'alignement (40) de la centrale inertielle en cas d'apparition de mouvement,
   - reprendre l'alignement (40) de la centrale Inertielle à la disparition du mouvement,

   l'étape de suspension de l'alignement (40) de la centrale inertielle comprenant une sous-étape consistant à garder en mémoire des valeurs courantes utilisées pour l'alignement (40), et l'étape de reprise de l'alignement (40) comprenant une sous-étape consistant à récupérer les valeurs enregistrées pour la suite de l'alignement (40).

2. Procédé selon la revendication 1, **caractérisé en ce que** l'instrument de bord est un instrument de secours (1) générant et affichant des Informations de vitesse, d'altitude et d'attitude de l'aéronef (20).

3. Procédé selon l'une des revendications précédentes, **caractérisé en ce que** l'apparition du mouvement est détectée par un accéléromètre (31).

4. Procédé selon l'une des revendications précédentes, **caractérisé en ce que** le mouvement surveillé comprend une rotation autour d'un axe de lacet de l'aéronef (20) et une translation suivant l'axe de lacet de l'aéronef (20), un axe de roulis et/ou un axe de tangage de l'aéronef (20).

5. Procédé selon l'une des revendications précédentes, **caractérisé en ce que** l'alignement (40) de la centrale inertielle est suspendu lorsque le mouvement dépasse un seuil prédéfini (61).

6. Procédé selon l'une des revendications précédentes, **caractérisé en ce que** la durée de l'alignement, lorsqu'aucun mouvement n'est détecté (ALN_Duration), est une durée fixe paramétrable.

7. Procédé selon l'une des revendications précédentes, **caractérisé en ce que** le lancement de l'alignement (40) déclenche un décompte de la durée restante (Tps_ALN_restant) avant la fin de l'alignement (40) et **en ce que** la suspension de l'alignement (40) entraîne une suspension du décompte de la durée restante (Tps_ALN_restant).

8. Procédé selon la revendication 7, **caractérisé en ce que** l'alignement (40) de la centrale inertielle est annulé lorsque la durée restante (Tps_ALN_restant) avant la fin de l'alignement (40) additionnée au temps écoulé (Tps_ALN_total) depuis le début de l'alignement (40) est supérieure à une durée maximale déterminée (Max_Duration).

**9.** Procédé selon l'une des revendications précédentes, **caractérisé en ce que** la centrale inertielle comprend 3 gyromètres (30) pouvant mesurer chacun une vitesse angulaire $\left(\overrightarrow{\Omega_b}\right)$ d'un repère ($R_{is}$ ($\overrightarrow{X}_{is}$, $\overrightarrow{Y}_{is}$, $\overrightarrow{Z}_{is}$)) lié à l'instrument de bord par rapport à un repère inertiel ($R_t$ ($\overrightarrow{X}_t$, $\overrightarrow{Y}_t$, $\overrightarrow{Z}_t$)).

**10.** Procédé selon la revendication 9, **caractérisé en ce que** l'alignement (40) de la centrale inertielle comprend une étape de détermination d'une dérive $\left(\overrightarrow{d\Omega_c}\right)$ de chaque gyromètre (30).

**11.** Procédé selon la revendication 10, **caractérisé en ce que** l'étape de détermination d'une dérive $\left(\overrightarrow{d\Omega_c}\right)$ de chaque gyromètre (30) comprend une étape (42) de détermination d'une valeur minimale et d'une valeur maximale pour chaque dérive et une étape (43) de détermination précise de chaque dérive.

**12.** Instrument de bord pouvant équiper un aéronef (20) comprenant une centrale inertielle comportant des moyens d'alignement autonome (34), **caractérisé en ce qu'**il comprend des moyens (31) pour surveiller l'apparition d'un mouvement de la centrale inertielle pendant l'alignement (40), des moyens pour suspendre l'alignement (40) en cas d'apparition de mouvement et des moyens pour reprendre l'alignement (40) de la centrale inertielle à la disparition du mouvement, les moyens pour suspendre l'alignement (40) comportant une mémoire (33) dans laquelle sont placées des valeurs courantes utilisées pour l'alignement (40), les moyens pour reprendre l'alignement (40) permettant de récupérer les valeurs courantes mémorisées pour la suite de l'alignement (40).

**13.** instrument de bord selon la revendication 12, **caractérisé en ce que** l'instrument de bord est un instrument de secours (1) générant et affichant des informations de vitesse, d'altitude et d'attitude de l'aéronef (20).

**Claims**

**1.** A method for stand-alone alignment (40) of an inertial unit for an onboard instrument capable of being mounted in an aircraft (20), **characterized in that** it includes the following steps:

- monitoring the appearance of a movement of the inertial unit during the alignment (40),
- suspending the alignment (40) of the inertial unit in the event of the appearance of movement,
- resuming the alignment (40) of the inertial unit on the disappearance of the movement,

the step of suspension of the alignment (40) of the inertial unit including a sub-step consisting in storing current values used for the alignment (40), and the step of resumption of the alignment (40) including a sub-step consisting in recovering the recorded values for the continuation of the alignment (40).

**2.** The method as claimed in claim 1, **characterized in that** the onboard instrument is a stand-by instrument (1) generating and displaying information relating to the speed, altitude and attitude of the aircraft (20).

**3.** The method as claimed in one of the preceding claims, **characterized in that** the appearance of movement is detected by an accelerometer (31).

**4.** The method as claimed in one of the preceding claims, **characterized in that** the monitored movement comprises a rotation around a yaw axis of the aircraft (20) and a translation following the yaw axis of the aircraft (20), a roll axis and/or a pitch axis of the aircraft (20).

**5.** The method as claimed in one of the preceding claims, **characterized in that** the alignment (40) of the inertial unit is suspended if the movement exceeds a predefined threshold (61).

**6.** The method as claimed in one of the preceding claims, **characterized in that** the duration of the alignment, if no movement is detected (ALN_Duration), is a fixed, parameterizable duration.

**7.** The method as claimed in one of the preceding claims, **characterized in that** the start of the alignment (40) triggers a countdown of the remaining duration (Tps_ALN_remaining) before the end of the alignment (40) and **in that** the suspension of the alignment (40) results in a suspension of the countdown of the remaining duration (Tps_ALN_remaining).

8. The method as claimed in claim 7, **characterized in that** the alignment (40) of the inertial unit is cancelled if the remaining duration (Tps_ALN_remaining) before the end of the alignment (40) added to the time elapsed (Tps_ALN_total) since the start of the alignment (40) is greater than a determined maximum duration (Max_Duration).

9. The method as claimed in one of the preceding claims, **characterized in that** the inertial unit comprises 3 gyrometers (30) which can each measure an angular speed $\left( \overrightarrow{\Omega_{is}} \right)$ of a frame of reference ($R_{is}$ ($\overrightarrow{X_{is}}$, $\overrightarrow{Y_{is}}$, $\overrightarrow{Z_{is}}$)) linked to the onboard instrument in relation to an inertial frame of reference ($R_t$ ($\overrightarrow{X_t}$, $\overrightarrow{Y_t}$, $\overrightarrow{Z_t}$)).

10. The method as claimed in claim 9, **characterized in that** the alignment (40) of the inertial unit includes a step of determination of a drift $\left( \overrightarrow{d\Omega_c} \right)$ of each gyrometer (30).

11. The method as claimed in claim 10, **characterized in that** the step of determination of a drift $\left( \overrightarrow{d\Omega_c} \right)$ of each gyrometer (30) includes a step (42) of determination of a maximum value for each drift and a step (43) of precise determination of each drift.

12. An onboard instrument capable of being mounted in an aircraft (20), including an inertial unit comprising means for stand-alone alignment (34), **characterized in that** it includes means (31) for monitoring the appearance of a movement of the inertial unit during the alignment (40), means for suspending the alignment (40) in the event of the appearance of movement and means for resuming the alignment (40) of the inertial unit on the disappearance of the movement, the means for suspending the alignment (40) comprising a memory (33) in which current values used for the alignment (40) are placed, the means for resuming the alignment (40) allowing the current stored values to be recovered for the continuation of the alignment (40).

13. The onboard instrument as claimed in claim 12, **characterized in that** the onboard instrument is a stand-by instrument (1) generating and displaying information relating to the speed, altitude and attitude of the aircraft (20).

**Patentansprüche**

1. Verfahren zum unabhängigen Ausrichten (40) einer Trägheitseinheit für ein Bordinstrument für den Einbau in ein Luftfahrzeug (20), **dadurch gekennzeichnet, dass** es die folgenden Schritte beinhaltet:

    - Überwachen des Auftretens einer Bewegung der Trägheitseinheit während des Ausrichtens (40),
    - Unterbrechen des Ausrichtens (40) der Trägheitseinheit im Falle des Auftretens einer Bewegung,
    - Wiederaufnehmen des Ausrichtens (40) der Trägheitseinheit nach dem Aufhören der Bewegung,

    wobei der Schritt des Unterbrechens des Ausrichtens (40) der Trägheitseinheit einen Unterschritt beinhaltet, der darin besteht, die zum Ausrichten (40) verwendeten laufenden Werte in einem Speicher zu speichern, und der Schritt des Wiederaufnehmens des Ausrichtens (40) einen Unterschritt beinhaltet, der darin besteht, die gespeicherten Werte für das folgende Ausrichten (40) abzurufen.

2. Verfahren nach Anspruch 1, **dadurch gekennzeichnet, dass** das Bordinstrument ein Notinstrument (1) ist, das Informationen über Geschwindigkeit, Höhe und Lage des Luftfahrzeugs (20) erzeugt und anzeigt.

3. Verfahren nach einem der vorherigen Ansprüche, **dadurch gekennzeichnet, dass** das Auftreten der Bewegung von einem Beschleunigungsmesser (31) erfasst wird.

4. Verfahren nach einem der vorherigen Ansprüche, **dadurch gekennzeichnet, dass** die überwachte Bewegung eine Rotation um die Gierachse des Luftfahrzeugs (20) und eine Translation über die Gierachse des Luftfahrzeugs (20), eine Rollachse und/oder eine Nickachse des Luftfahrzeugs (20) umfasst.

5. Verfahren nach einem der vorherigen Ansprüche, **dadurch gekennzeichnet, dass** das Ausrichten (40) der Trägheitseinheit unterbrochen wird, wenn die Bewegung einen vordefinierten Schwellenwert (61) übersteigt.

6. Verfahren nach einem der vorherigen Ansprüche, **dadurch gekennzeichnet, dass** die Dauer des Ausrichtens, wenn keine Bewegung erfasst wird (ALN_Duration), eine parametrierbare feste Dauer ist.

7. Verfahren nach einem der vorherigen Ansprüche, **dadurch gekennzeichnet, dass** der Beginn des Ausrichtens (40) ein Herunterzählen der Restzeit (Tps_ALN_restant) bis zum Ende des Ausrichtens (40) auslöst, und **dadurch**, dass das Unterbrechen des Ausrichtens (40) eine Unterbrechung des Herunterzählens der Restzeit (Tps_ALN_restant) mit sich bringt.

8. Verfahren nach Anspruch 7, **dadurch gekennzeichnet, dass** das Ausrichten (40) der Trägheitseinheit storniert wird, wenn die Restzeit (Tps_ALN_restant) bis zum Ende des Ausrichtens (40), die zur verstrichenen Zeit (Tps_ALN-total) seit Beginn des Ausrichtens (40) addiert wird, größer als eine vorbestimmte Maximaldauer (Max_Duration) ist.

9. Verfahren nach einem der vorherigen Ansprüche, **dadurch gekennzeichnet, dass** die Trägheitseinheit 3 Gyrometer (30) umfasst, die jeweils eine Winkelgeschwindigkeit $(\overrightarrow{\Omega_{ib}})$ von einer mit dem Bordinstrument verbundenen Markierung ($R_{is}$ ($\overrightarrow{X}_{is}$, $\overrightarrow{Y}_{is}$, $\overrightarrow{Z}_{is}$)) in Bezug auf eine Trägheitsmarkierung ($R_t$ ($\overrightarrow{X}_t$, $\overrightarrow{Y}_t$, $\overrightarrow{Z}_t$)) messen kann.

10. Verfahren nach Anspruch 9, **dadurch gekennzeichnet, dass** das Ausrichten (40) der Trägheitseinheit einen Schritt des Ermittelns einer Abweichung $(\overrightarrow{d\Omega_c})$ jedes Gyrometers (30) beinhaltet.

11. Verfahren nach Anspruch 10, **dadurch gekennzeichnet, dass** der Schritt des Ermittelns einer Abweichung $(\overrightarrow{d\Omega_c})$ jedes Gyrometers (30) einen Schritt (42) des Ermittelns eines Minimalwertes und eines Maximalwertes für jede Abweichung und einen Schritt (43) des genauen Ermittelns jeder Abweichung beinhaltet.

12. Bordinstrument für den Einbau in ein Luftfahrzeug (20), umfassend eine Trägheitseinheit, die unabhängige Ausrichtungsmittel (34) umfasst, **dadurch gekennzeichnet, dass** es Mittel (31) zum Überwachen des Auftretens einer Bewegung der Trägheitseinheit während des Ausrichtens (40), Mittel zum Unterbrechen des Ausrichtens (40) im Falle des Auftretens einer Bewegung und Mittel zum Wiederaufnehmen des Ausrichtens (40) der Trägheitseinheit nach dem Aufhören der Bewegung umfasst, wobei die Mittel zum Unterbrechen des Ausrichtens (40) einen Speicher (33) umfassen, in dem sich zum Ausrichten (40) verwendete laufende Werte befinden, wobei es die Mittel zum Wiederaufnehmen des Ausrichtens (40) zulassen, die gespeicherten laufenden Werte für den Rest des Ausrichtens (40) abzurufen.

13. Bordinstrument nach Anspruch 12, **dadurch gekennzeichnet, dass** das Bordinstrument ein Notinstrument (1) ist, das Informationen über Geschwindigkeit, Höhe und Lage des Luftfahrzeugs (20) erzeugt und anzeigt.

FIG.1

FIG.2

FIG.3

EP 2 225 535 B1

MISE SOUS TENSION — 41

40

MISE À NIVEAU — 42

ALIGNEMENT — 43

RELANCE ALIGNEMENT — 46

ALIGNEMENT CORRECT ? — 44

NON

OUI

NAVIGATION — 45

**FIG.4**

MISE SOUS TENSION — 41

40

MISE À NIVEAU — 42

ALIGNEMENT — 43

DETECTION DE MOUVEMENT — 51

NAVIGATION — 45

**FIG.5**

FIG.6

FIG.7

FIG.8

**EP 2 225 535 B1**

**RÉFÉRENCES CITÉES DANS LA DESCRIPTION**

**Documents brevets cités dans la description**

- DE 3443317

- US 2006047427 A